# EUROPEAN PATENT APPLICATION

(11) **EP 3 860 040 A1**
(43) Date of publication of application: **04.08.2021**
(21) Application number: 19865978.1
(22) Date of filing: 26.09.2019
(51) Int. Cl.: H04L 9/32, G06F 21/62, G06F 21/64

(54) **DATA MANAGEMENT SERVER, DATA UTILIZATION SERVER, DATA CIRCULATION SYSTEM, DATA MANAGEMENT METHOD, AND PROGRAM**

(30) Priority: 28.09.2018 JP 2018183697
(71) Applicant: Mitsubishi Electric Corporation, Tokyo 100-8310 (JP)
(72) Inventor: HARADA Atsushi, Tokyo 100-810 (JP); NAGASAWA Masato, Tokyo 100-810 (JP)
(74) Representative: Pfenning, Meinig & Partner mbB
(86) International application number: PCT/JP2019/038034
(87) International publication number: WO 2020/067376

(57) **Abstract**

The data management server (10) includes a data acquirer (113) and an individual metadata generator (114a). The data acquirer (113) acquires main data including a plurality of pieces of device data. The individual metadata generator (114a) generates individual metadata including target data information and process information. The target data information indicates, as target data, one or more of the plurality of pieces of device data included in the main data. The process information is associated with a process performed on the target data indicated by the target data information.

## Description

### Technical Field

The present disclosure relates to a data management server, a data utilization server, a data circulation system, a data management method, and a program.

### Background Art

Data circulation markets have been formed for trading device data acquired from devices. For example, Patent Literature 1 describes forming a data circulation market with a sensing network including multiple wireless communication nodes, a mediation server for collecting sensing data from the wireless communication nodes, and an application server for receiving such sensing data from the mediation server.

### Citation List

### Patent Literature

Patent Literature 1: Unexamined Japanese Patent Application Publication No. 2015-38484

### Summary of Invention

### Technical Problem

Fair circulation of device data as valuable data involves management of information attached to the device data, such as quality information, right information, and data authenticity.

The advanced technologies related to the Internet of Things (IoT) are expected to increase the amount of device data in the data circulation market. This can increase the amount of information attached to such device data and increase the workload for managing the information.

However, Patent Literature 1 does not describe any techniques for appropriately managing information attached to device data, despite the expected increase in the workload for managing such information. Techniques are thus awaited for appropriately managing information attached to device data.

In response to the above issue, an objective of the present disclosure is to provide, for example, a data management server for appropriately managing information attached to device data.

### Solution to Problem

To achieve the above objective, a data management server according to an aspect of the present disclosure includes main data acquisition means for acquiring main data including a plurality of pieces of device data, and individual metadata generation means for generating individual metadata including target data information and process information. The target data information indicates, as target data, one or more of the plurality of pieces of device data included in the main data. The process information is associated with a process performed on the target data indicated by the target data information.

### Advantageous Effects of Invention

The technique according to the above aspect of the present disclosure generates individual metadata including target data information indicating, as target data, one or more of a plurality of pieces of device data included in main data, and process information associated with a process performed on the target data, and can attach information individually to one or more of the pieces of data. The technique according to the present disclosure can thus appropriately manage information attached to the device data.

### Brief Description of Drawings

FIG. 1 is a block diagram of a data circulation system according to Embodiment 1 of the present disclosure;
FIG. 2 is a table of example device data transmitted by devices in Embodiment 1 of the present disclosure;
FIG. 3 is a functional block diagram of a data management server according to Embodiment 1 of the present disclosure;
FIG. 4 is a functional block diagram of a data utilization server according to Embodiment 1 of the present disclosure;
FIG. 5 is a block diagram of the data management server according to Embodiment 1 of the present disclosure showing an example hardware configuration;
FIG. 6 is a block diagram of circulation data generated by the data management server according to Embodiment 1 of the present disclosure showing the data structure;
FIG. 7 is a table of example target data information generated by the data management server according to Embodiment 1 of the present disclosure;
FIG. 8 is a table of example information about measurement accuracy corresponding to each model used by the data management server according to Embodiment 1 of the present disclosure;
FIG. 9 is a diagram showing example quality information and target data information generated by the data management server according to Embodiment 1 of the present disclosure;
FIG. 10 is a table of example right information generated by the data management server according to Embodiment 1 of the present disclosure;
FIG. 11 is a flowchart showing an example operation for individual metadata generation performed by the data management server according to Embodiment 1 of the present disclosure;
FIG. 12 is a flowchart showing an example operation for circulation data transmission performed by the data management server according to Embodiment 1 of the present disclosure;
FIG. 13 is a flowchart showing an example operation for circulation data verification performed by the data utilization server according to Embodiment 1 of the present disclosure;
FIG. 14 is a block diagram of circulation data generated by a data management server according to Embodiment 2 of the present disclosure showing the data structure; and
FIG. 15 is a block diagram of a data circulation system according to Embodiment 3 of the present disclosure.

### Description of Embodiments

A data circulation system according to one or more embodiments of the present disclosure will now be described with reference to the drawings. Throughout the drawings, the same or equivalent components are denoted by the same reference numerals.

### Embodiment 1

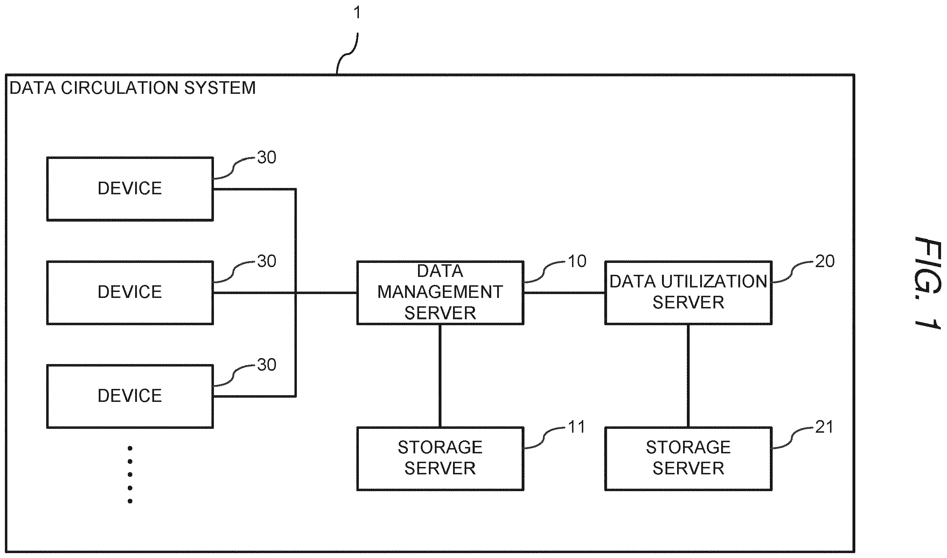

A data circulation system 1 according to Embodiment 1 will now be described with reference to FIG. 1. The data circulation system 1 may be used for trading device data. The data circulation system 1 includes a data management server 10, a storage server 11, a data utilization server 20, a storage server 21, and multiple devices 30. The data circulation system 1 is an example of a data circulation system according to the present disclosure.

The data management server 10 is, for example, a maker server administered by a manufacturer of the devices 30. The data management server 10 receives device data from the devices 30 and saves the device data into the storage server 11. The data management server 10 transmits, to the data utilization server 20, circulation data including device data and individual metadata (described later). The data management server 10 may receive device data about the devices 30 manufactured by a manufacturer different from the administrator of the data management server 10. The data management server 10 is an example of a data management server according to the present disclosure.

The administrator of the data management server 10 distributes, to the data utilization server 20, a public key generated by the data management server 10 to cause the data utilization server 20 to verify certification information (described later) included in individual metadata. The public key for such verification is hereinafter simply referred to as the public key of the data management server 10. For example, the administrator of the data management server 10 may publish the public key of the data management server 10 on the Internet.

The data utilization server 20 is a servicer server administered by a servicer that provides, for example, services based on device data to customers. The servicer provides various services to customers through the data utilization server 20. Examples of the services based on device data include monitoring the operational statuses of the devices 30 in a customer's home based on device data, and suggesting a plan for power saving to a customer based on device data accumulated for one month.

The data utilization server 20 requests circulation data from the data management server 10. The data utilization server 20 receives circulation data transmitted, upon the request, from the data management server 10 and saves the circulation data into the storage server 21. The data utilization server 20 provides services to customers based on the device data included in the saved circulation data. The data utilization server 20 is an example of a data utilization server according to the present disclosure.

The storage server 11 and the storage server 21 are, for example, cloud storage servers that are administered by a cloud provider. For example, the administrator of the data management server 10 pays a use fee to the administrator of the storage server 11 in accordance with, for example, the amount of data saved or read.

The devices 30 are, for example, IoT devices capable of communicating with the data management server 10. Examples of the devices 30 include electrical devices such as air conditioners, water heaters, and cookers, and sensors such as power meters, thermometers, and airflow meters. The devices 30 transmit information about their operation, status, or other aspects as device data to the data management server 10. The devices 30 are examples of devices according to the present disclosure.

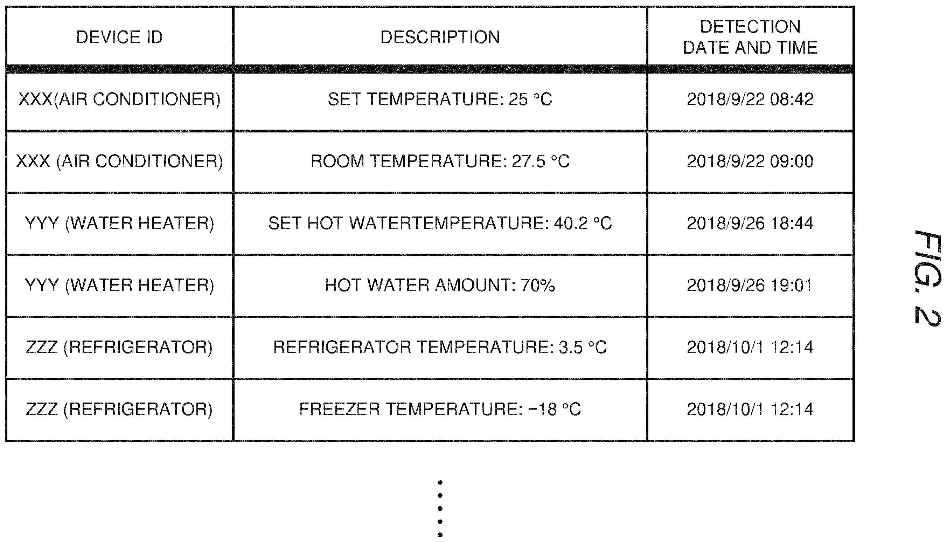

FIG. 2 shows an example of device data. The device data for each device 30 includes a device identifier (ID) for individually identifying the device 30, information about the operation, status, or other aspects of the device 30, and information about the date and time on which the operation, status, or other aspects was detected. The device ID for individually identifying the device 30 may be, for example, a character string combining the model number and the serial number of the device 30. The operation is detected when, for example, the operation is performed in response to a user operation. The status is detected at predetermined time intervals of, for example, one hour. The device 30 may transmit device data to the data management server 10 immediately upon detecting the operation, status, or other aspects of the device 30. In some embodiments, the device 30 may temporarily save device data without immediately transmitting the data, and transmit the saved data at predetermined time intervals. The device data is represented in, for example, the JavaScript Object Notation (JSON) or the Extensible Markup Language (XML).

The data management server 10 and the data utilization server 20 communicate with each other through, for example, a predetermined web application programming interface (API). For example, the data management server 10 is a web API server having an interface conforming to the web API, and the data utilization server 20 is a web API client capable of communicating with the web API server or the data management server 10. The data utilization server 20 can also communicate with a data management server administered by an administrator different from the administrator of the data management server 10 and conforming to the web API, in the same manner as with the data management server 10. The communication through the web API may be performed with the Hypertext Transfer Protocol Secure (HTTPS) for security.

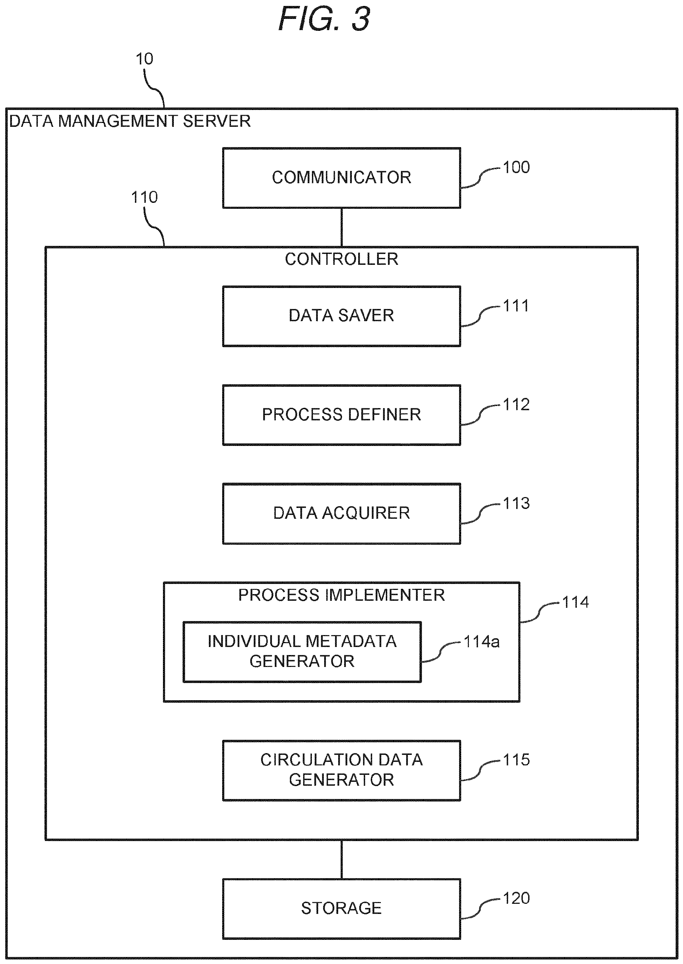

With reference to FIG. 3, the functional components of the data management server 10 will now be described. The data management server 10 includes a communicator 100, a controller 110, and a storage 120.

The communicator 100 is, for example, a network interface. The communicator 100 communicates with the devices 30, the storage server 11, and the data utilization server 20. In particular, the communicator 100 receives device data from a device 30 and transmits circulation data (described later) to the data utilization server 20. The communicator 100 is an example of circulation data transmission means according to the present disclosure.

The controller 110 centrally controls the data management server 10. The controller 110 includes a data saver 111, a process definer 112, a data acquirer 113, a process implementer 114, and a circulation data generator 115. The process implementer 114 includes an individual metadata generator 114a.

The data saver 111 saves, into the storage server 11 through the communicator 100, device data received by the communicator 100 from the device 30. The data saver 111 generates a device data ID for individually identifying the device data at the data management server 10 and saves the device data in a manner associated with the device data ID. The term device data herein, when read from the storage server 11, refers to device data including the device data ID associated with the device data.

The data saver 111 also saves, into the storage server 11 through the communicator 100, individual metadata generated by the individual metadata generator 114a (described later).

The process definer 112 defines a process to be performed for the device data saved in the storage server 11. The process to be performed for the device data is hereinafter referred to as a process.

Examples of the processes include adding information about measurement accuracy, categorizing device data by a specific condition such as the date and time or the area, adding information indicating the degree of anonymity of device data, and adding information about trading of data. Such processes will be described in detail as appropriate.

A process may be performed automatically in accordance with a preset schedule or may be performed in response to an instruction from the manager of the data management server 10. The process may also be performed upon a request from the data utilization server 20 (described later). The process definer 112 defines the details of a process in accordance with such a preset schedule, an instruction, or a request.

The data acquirer 113 acquires, from the storage server 11 through the communicator 100, main data including multiple pieces of device data. The main data acquired by the data acquirer 113 includes pieces of device data to undergo the process defined by the process definer 112. The data acquirer 113 also acquires, as appropriate, individual metadata saved in the storage server 11. The data acquirer 113 is an example of main data acquisition means according to the present disclosure.

The process implementer 114 performs the process defined by the process definer 112 on each piece of device data included in the main data acquired by the data acquirer 113. The process implementer 114 also causes the individual metadata generator 114a to generate individual metadata. In particular, the individual metadata includes process information and certification information. The process information is associated with a process. The certification information is used for certifying the authenticity of the target data and the authenticity of the process information. The authenticity herein refers to the authenticity of data that has been generated by the data management server 10 and has not undergone tampering. The individual metadata will be described in detail later. The individual metadata generator 114a is an example of metadata generation means according to the present disclosure.

The circulation data generator 115 generates comprehensive metadata based on the main data and individual metadata acquired by the data acquirer 113, and on the individual metadata generated by the individual metadata generator 114a. The comprehensive metadata will be described in detail later. The circulation data generator 115 generates circulation data including the main data and individual metadata acquired by the data acquirer 113, the individual metadata generated by the individual metadata generator 114a, and the generated comprehensive metadata. The generated circulation data is transmitted to the data utilization server 20 through the communicator 100. The circulation data generator 115 is an example of circulation data generation means according to the present disclosure.

The storage 120 stores information to be used in a specific process, such as detailed information or right information about the devices 30. The storage 120 also stores a secret key corresponding to the public key of the data management server 10. The secret key is hereinafter referred to as the secret key of the data management server 10, or simply referred to as the secret key. The secret key is used for generating the above certification information. A single secret key may be used for the data management server 10, or multiple different secret keys may be used for different organizations or departments managing individual processes.

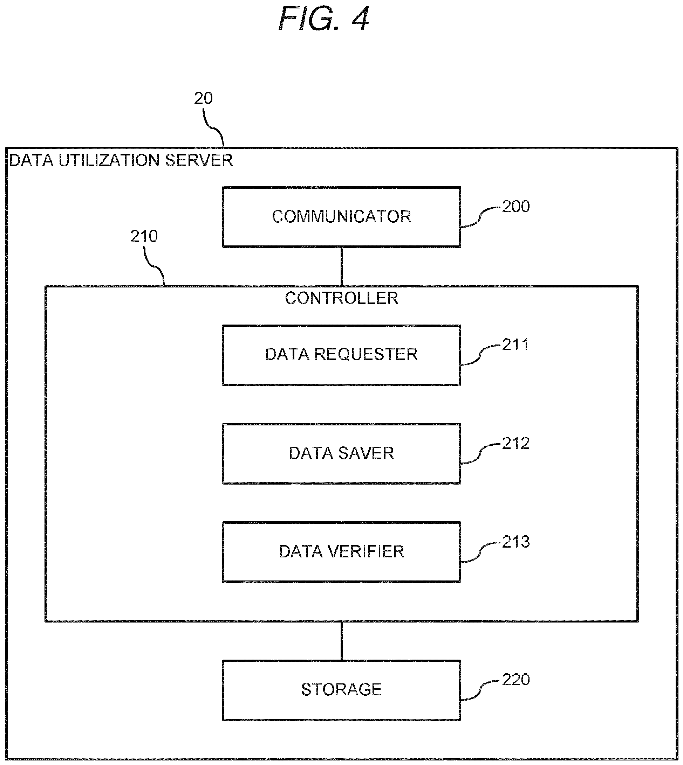

With reference to FIG. 4, the functional components of the data utilization server 20 will now be described. The data utilization server 20 includes a communicator 200, a controller 210, and a storage 220.

The communicator 200 is, for example, a network interface. The communicator 200 communicates with the data management server 10 and the storage server 21. In particular, the communicator 200 receives circulation data from the data management server 10. The communicator 200 is an example of circulation data reception means according to the present disclosure.

The controller 210 centrally controls the data utilization server 20. The controller 210 includes a data requester 211, a data saver 212, and a data verifier 213.

The data requester 211 requests, through the communicator 200, the data management server 10 to transmit circulation data. For example, the data requester 211 requests data satisfying a specific condition, such as data about the set temperatures for an air conditioner in September in 2018, or data about freezer temperatures in the Kanto region.

The data saver 212 saves, into the storage server 21 through the communicator 200, the circulation data received by the communicator 200.

The data verifier 213 verifies, based on the process information, the target data represented by target data information. The data verifier 213 verifies, based on the certification information, the authenticity of the target data and the authenticity of the process information. The verification will be described in detail later. The data verifier 213 is an example of data verification means according to the present disclosure.

The storage 220 stores information to be used for verifying data, such as detailed information or right information about the devices 30. The storage 220 also stores the public key of the data management server 10. The public key of the data management server 10 is used for verifying the certification information as described above.

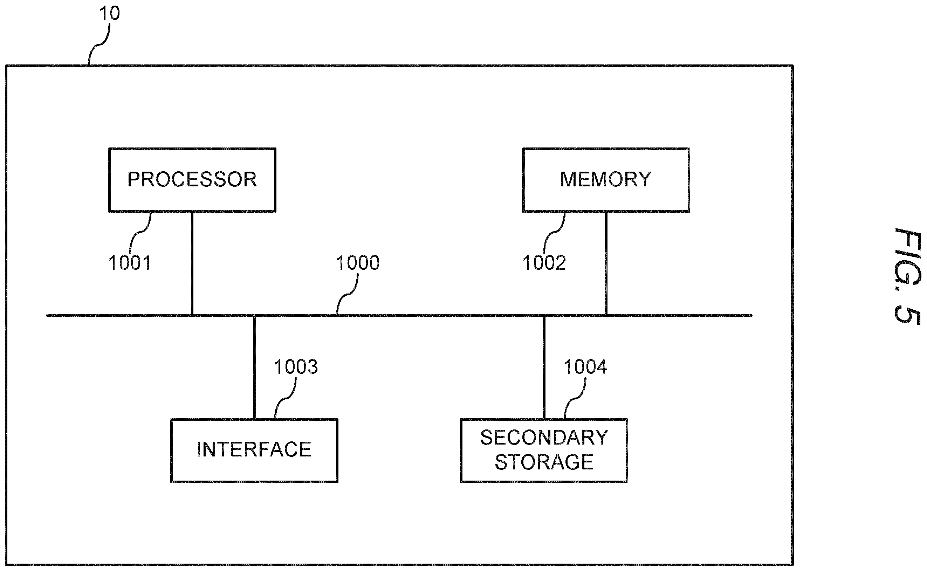

With reference to FIG. 5, an example hardware configuration of the data management server 10 will now be described. The data management server 10 shown in FIG. 5 is implemented by a computer, such as a server machine, a personal computer, or a microcontroller.

The data management server 10 includes a processor 1001, a memory 1002, an interface 1003, and a secondary storage 1004 that are connected to one another with a bus 1000.

The processor 1001 is, for example, a central processing unit (CPU). The functions of the data management server 10 are implemented by the processor 1001 reading an operational program from the secondary storage 1004 into the memory 1002 and executing the program.

The memory 1002 is, for example, a primary storage including a random-access memory (RAM). The memory 1002 stores the operational program read from the secondary storage 1004 by the processor 1001. The memory 1002 serves as a work memory used by the processor 1001 for executing the operational program.

The interface 1003 is, for example, an input-output (I/O) port, such as a serial port or a network interface. The interface 1003 functions as the communicator 100.

The secondary storage 1004 is, for example, a flash memory, a hard disk drive (HDD), or a solid-state drive (SSD). The secondary storage 1004 stores the operational program to be executed by the processor 1001. The secondary storage 1004 functions as the storage 120.

The data utilization server 20 may also have the hardware configuration shown in, for example, FIG. 5.

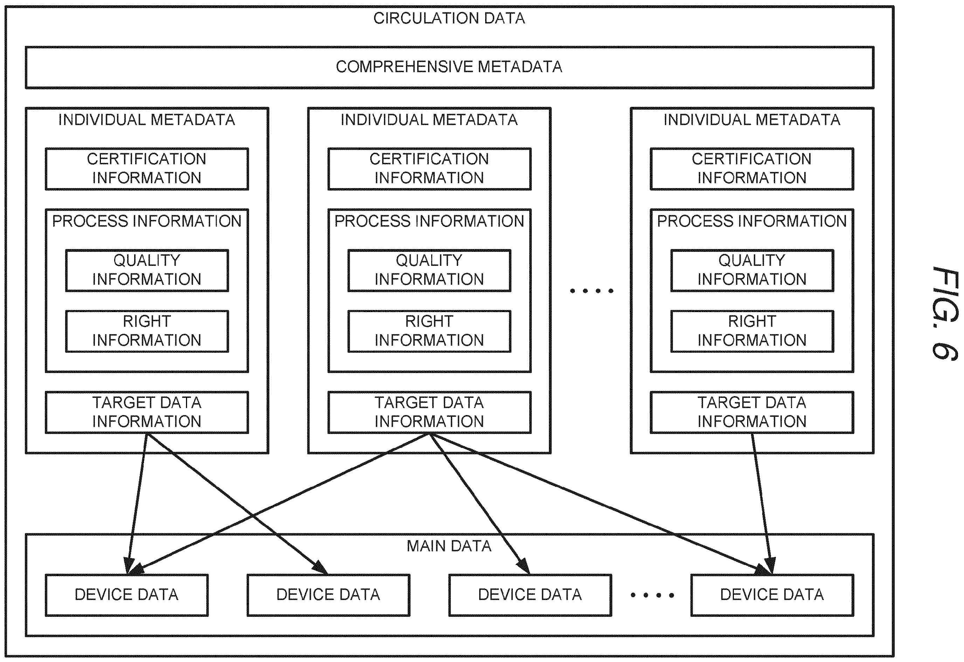

The data structure of each item of data described above will now be described. With reference to FIG. 6, the data structure of the circulation data generated by the circulation data generator 115 in the controller 110 in the data management server 10 will be described first.

The circulation data includes one piece of main data, multiple pieces of individual metadata, and one piece of comprehensive metadata. The circulation data is represented in, for example, the JSON or the XML

The main data is a data set including multiple pieces of device data. The device data herein includes the device data ID as described above.

The individual metadata includes the target data information indicating, as target data, device data included in the main data, the process information associated with a process performed on the target data, and the certification information used for certifying the authenticity of the target data and the authenticity of the process information. In other words, the individual metadata associates the target data information, the process information, and the certification information with one another.

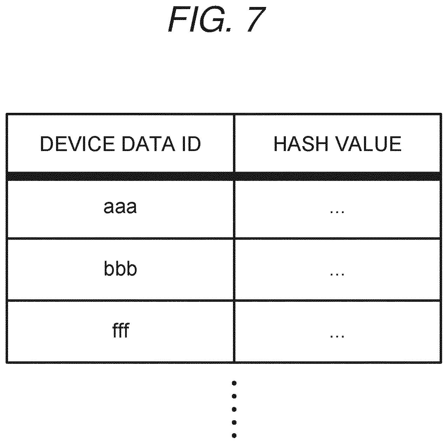

The target data information indicates, as target data, one or more pieces of device data included in the main data. The target data information is represented by one or more combinations of a device data ID and a hash value as shown in, for example, FIG. 7. The device data ID is associated with the device data as target data. The hash value is calculated from the device data indicated by the device data ID. This hash value is used for data verification (described later). Multiple pieces of target data information may indicate the same device data as target data.

Referring back to FIG. 6, the process information includes quality information and right information. The quality information is about the quality of device data acquired through a process. The quality herein broadly includes information about a mere process. Examples of the quality information include the following: information about the measurement accuracy of a device 30 that has transmitted device data, information indicating the category of device data, information indicating the degree of anonymity of device data, and information about trading of device data.

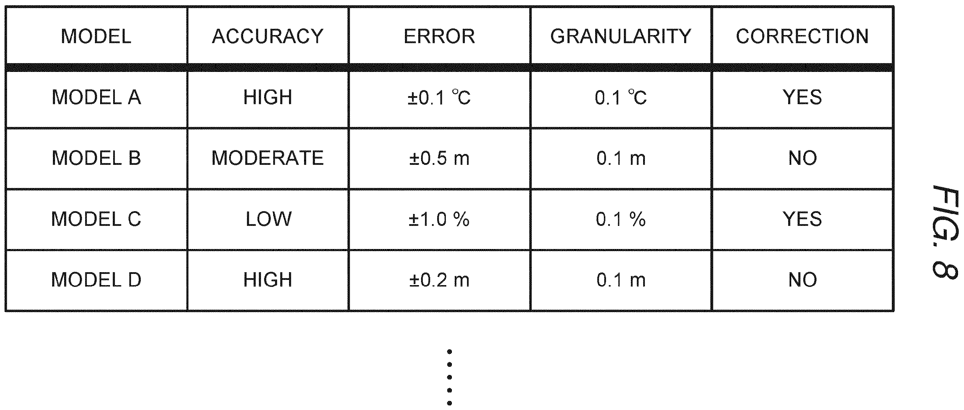

An example will be described focusing on a process for adding information about the measurement accuracy of a device 30 to target data. As shown in FIG. 8, the storage 120 saves information about the measurement accuracy of the device 30 of each model. In this case, the process implementer 114 first identifies a model based on the device ID included in the target data indicated by the target data information, and acquires information about the measurement accuracy of the model. The process implementer 114 then causes the individual metadata generator 114a to generate, as quality information, information including the acquired measurement accuracy. For example, when the device data as target data is about a device B, the quality information includes information indicating accuracy: moderate, error: ±0.5 m, granularity: 0.1 m, and correction: No.

Another example will be described focusing on a process for categorizing device data by date and time. This example focuses on a process for categorizing the device data shown in FIG. 2 by month. In this case, the device data with the device ID of XXX or YYY is all categorized as September, and the device data with the device ID of ZZZ is all categorized as October. For the device data with the device ID of XXX or YYY as target data, the process implementer 114 causes the individual metadata generator 114a to generate quality information indicating the category of September and to generate associated target data information. For the device data with the device ID of ZZZ as target data, the process implementer 114 causes the individual metadata generator 114a to generate quality information indicating the category of October and to generate associated target data information.

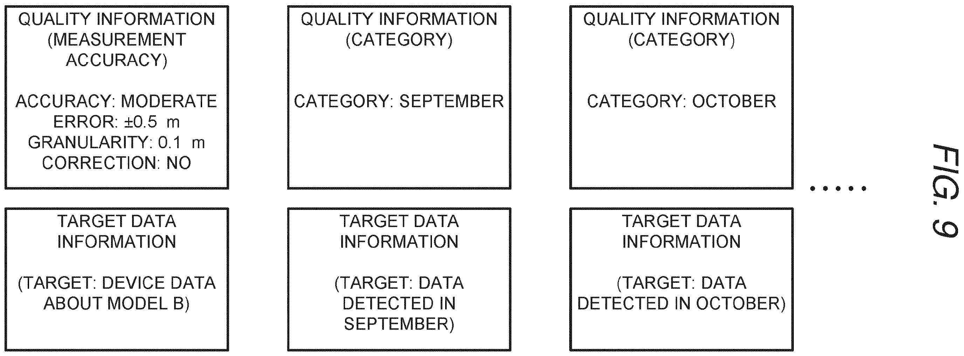

The quality information and the target data information associated with the quality information are as shown in, for example, FIG. 9.

The right information will now be described. The right information is information about rights for data associated with the processes, such as the ownership, the use right, and the right to suspend use. These rights are defined based on, for example, the contracts between the maker that administers the data management server 10 and that has manufactured the devices 30, the servicer that administers the data utilization server 20, the owners of the devices 30, and the constructors that have installed the devices 30.

The ownership of data is defined as any right related to the data, such as the right to use, manage, disclose, transfer, discard, replicate, or sell the data, the right to grant the use right to other people, or the right to deprive other people of the use right. Any copyright to the data may also be included in the ownership. The ownership may be possessed by the maker that has manufactured a device 30, or by the owner of the device 30, depending on the contract.

The use right to data is defined as the right to use the data granted by, for example, the contract with the owner. The use right to data is possessed by, for example, the servicer that has the contract with the maker having the ownership of the data.

The right to suspend use of data is defined as the right to suspend other people's use of the data independently of the ownership of the data. The right to suspend use of data is possessed by, for example, the owner of a device 30 that has provided device data about the device 30.

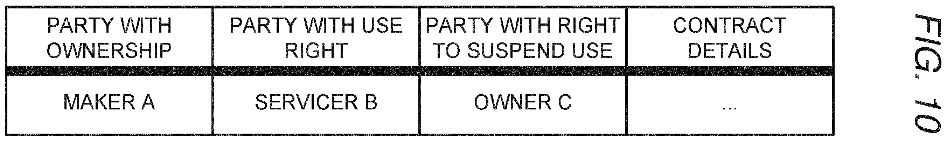

The right information generated by the individual metadata generator 114a included in the process implementer 114 is shown in, for example, FIG. 10. An example will be described focusing on a process performed upon a data request from the data utilization server 20. The data request from the data utilization server 20 is, for example, a request for device data about an air conditioner in September. In this case, the process implementer 114 performs a process for categorizing the data detected in September, from among the pieces of device data about the air conditioner. The process implementer 114 then causes the individual metadata generator 114a to generate right information. The right information includes a maker A, or the administrator of the data management server 10, set to a party with the ownership, a servicer B, or the administrator of the data utilization server 20, set to a party with the use right, and an owner C, or the owner of the device 30 and also the data provider about the device 30, set to a party with the right to suspend use.

The certification information will now be described. The certification information is used for certifying the authenticity of the target data and the authenticity of the process information. In other words, the certification information is used to certify that the target data or the process information has not undergone any tampering.

The certification information is generated by, for example, calculating the hash value of the data combining the process information and the target data information together, and converting the hash value using the secret key of the data management server 10. In other words, the certification information is generated by digitally signing, using the secret key, the data combining the process information and the target data information together. The target data information includes the hash value of each piece of target data as described above. Thus, digitally signing the data including the target data information allows certification of the authenticity of both the process information and the target data, although the target data is not digitally signed.

A data user recovers a hash value by converting the certification information using the public key of the data management server 10, and compares the recovered hash value with the hash value of the data combining the process information and the target data information together. The data user can thus verify that neither the process information nor the target data information has undergone any tampering. The data user also compares the hash value of each piece of target data included in the target data information with the hash value actually calculated from the corresponding piece of target data. The data user can thus verify that the corresponding piece of target data has not undergone any tampering.

The target data information, the process information, and the certification information included in the individual metadata have been described. Referring back to FIG. 6, the comprehensive metadata will now be described. The comprehensive metadata includes information about the main data and individual metadata to be included in the circulation data. The comprehensive metadata includes, for example, information indicating all pieces of individual metadata to be included in the circulation data. In some embodiments, the comprehensive metadata may include, for example, information for certifying the authenticity of all pieces of individual metadata. In some embodiments, the comprehensive metadata may include, for example, information about the rights for the overall circulation data.

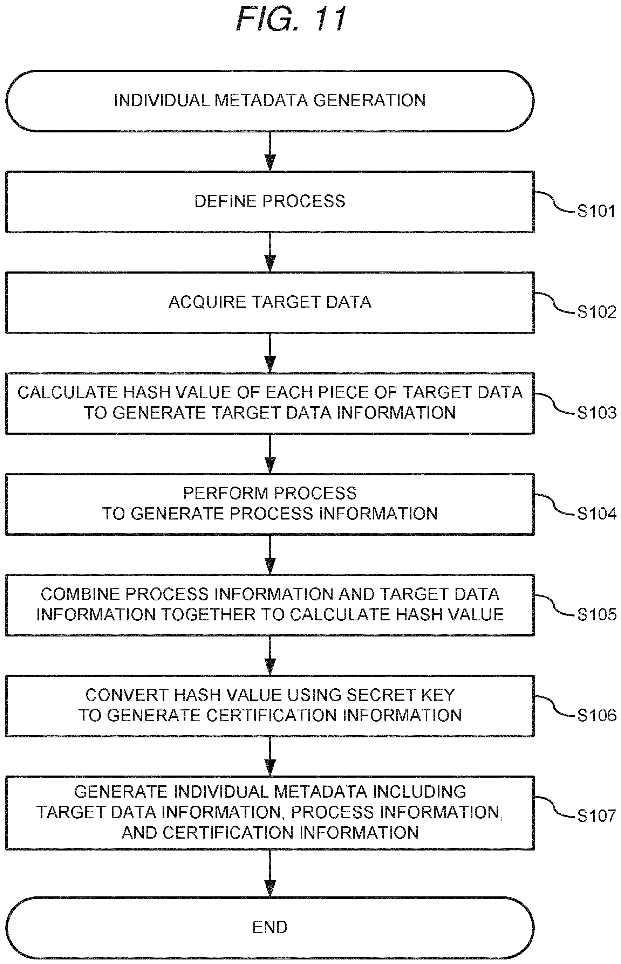

The data structure has been described. With reference to FIG. 11, an example operation for individual metadata generation performed by the data management server 10 will now be described.

The process definer 112 included in the controller 110 in the data management server 10 defines the details of the process to be performed (step S101). The data acquirer 113 included in the controller 110 then acquires, as target data, at least one piece of device data to undergo the process (step S102). The acquired target data typically includes multiple pieces of data.

In the controller 110, the individual metadata generator 114a included in the process implementer 114 calculates the hash value of each piece of target data to generate target data information associated with a device data ID (step S103). The target data information is shown in, for example, FIG. 7 as described above.

The process implementer 114 performs the process defined for the target data by the process definer 112, and causes the individual metadata generator 114a to generate process information (step S104). More specifically, the individual metadata generator 114a generates process information including quality information and right information.

The individual metadata generator 114a combines the process information and the target data information together to calculate the hash value of the combined data (step S105). The combined data is saved temporarily, rather than permanently.

The individual metadata generator 114a converts, using the secret key saved in the storage 120, the hash value calculated in step S105 to generate certification information (step S106).

The individual metadata generator 114a generates individual metadata including the target data information generated in step S103, the process information generated in step S104, and the certification information generated in step S106 (step S107). The controller 110 then ends the operation for individual metadata generation. After generating the individual metadata, the controller 110 saves, into the storage server 11 through the data saver 111, for example, all pieces of generated individual metadata. In some embodiments, the controller 110 causes the circulation data generator 115 to generate circulation data including the target data and the individual metadata as described later.

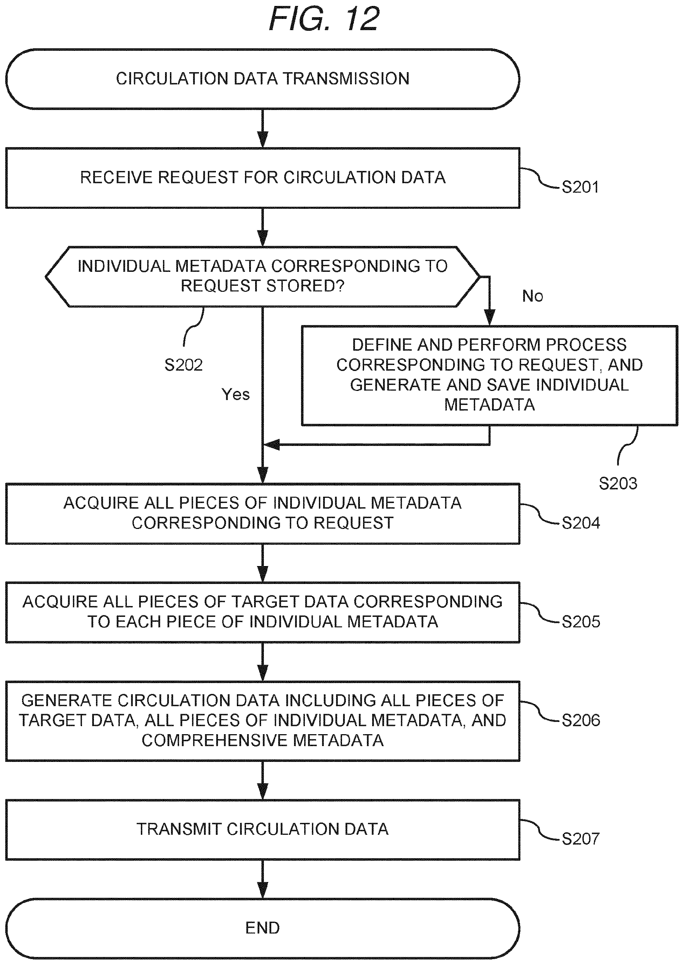

With reference to FIG. 12, an example operation for circulation data transmission performed by the data management server 10 will now be described.

The communicator 100 in the data management server 10 receives a request for circulation data from the data utilization server 20 (step S201). The controller 110 in the data management server 10 determines whether the storage server 11 stores the individual metadata corresponding to the request (step S202). This determination may include checking the request against a predetermined condition to partially or totally reject the request for data. For example, for a request for device data about an air conditioner in September, individual metadata corresponding to this request is to include process information including the quality information indicating the category of device data about the air conditioner in September.

When the storage server 11 stores the individual metadata corresponding to the request (Yes in step S202), the controller 110 performs the operation in and after step S204. When the storage server 11 does not store the individual metadata corresponding to the request (No in step S202), the controller 110 causes the process definer 112 to define the details of the process corresponding to the request, causes the process implementer 114 to perform the process, causes the individual metadata generator 114a included in the process implementer 114 to generate the individual metadata, and causes the data saver 111 to save the individual metadata into the storage server 11 (step S203).

The data acquirer 113 in the controller 110 acquires, from the storage server 11, all pieces of individual metadata corresponding to the request (step S204). The data acquirer 113 acquires, from the storage server 11, all pieces of target data corresponding to each piece of individual metadata acquired in step S204, or in other words, all pieces of target data indicated by the target data information included in each piece of individual metadata (step S205).

The circulation data generator 115 in the controller 110 generates comprehensive metadata based on the individual metadata acquired in step S204, and generates circulation data including all pieces of target data, all pieces of individual metadata, and the comprehensive metadata (step S206).

The controller 110 transmits, to the data utilization server 20 through the communicator 100, the circulation data generated in step S206 (step S207). The controller 110 then ends the operation for circulation data transmission.

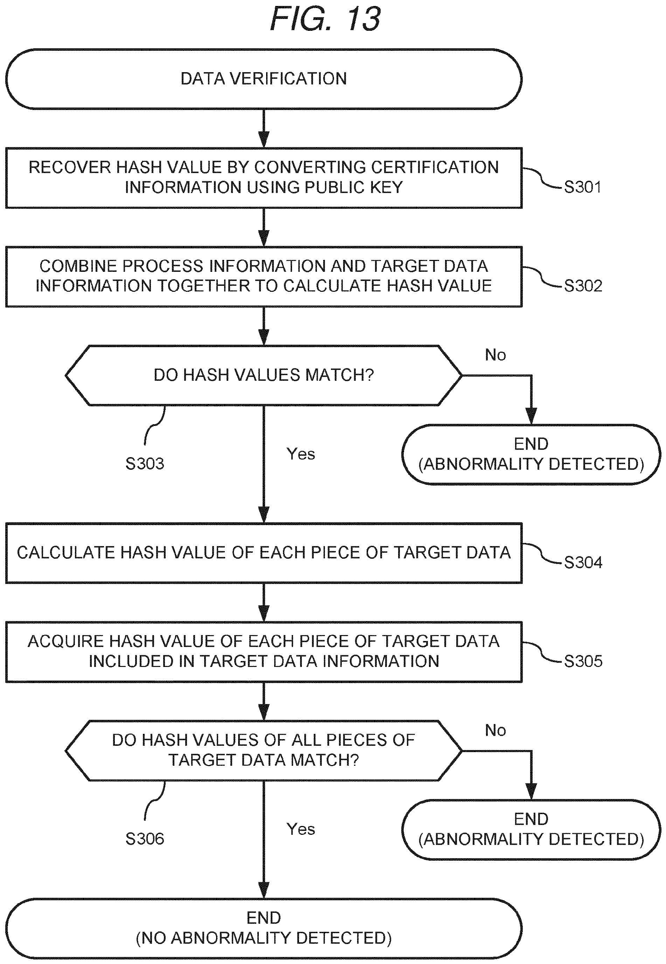

With reference to FIG. 13, an example operation for circulation data verification performed by the data utilization server 20 will now be described. The operation shown in FIG. 13 is performed on the circulation data saved in the storage server 21 in units of pieces of individual metadata. The operation shown in FIG. 13 is performed, for example, immediately after the circulation data is received and saved into the storage server 21.

The data verifier 213 in the controller 210 in the data utilization server 20 recovers a hash value by converting, using the public key of the data management server 10 saved in the storage 220, the certification information included in the individual metadata in the circulation data (step S301).

The data verifier 213 generates data by combining the process information and the target data information together included in the individual metadata, and calculates the hash value of the combined data (step S302). The data verifier 213 determines whether the hash value recovered from the certification information in step S301 matches the hash value calculated in step S302 (step S303).

When the hash values do not match (No in Step S303), at least one of the process information or the target data information is likely to be corrupt or tampered. Thus, the controller 210 detects an abnormality in the circulation data and ends the operation for verification.

When the hash values match (Yes in step S303), the data verifier 213 calculates the hash value of each piece of target data indicated by the target data information (step S304). The data verifier 213 acquires the hash value of each piece of target data included in the target data information (step S305). The data verifier 213 determines, for all pieces of target data, whether the hash value calculated in step S304 matches the hash value acquired in step S305 (step S306).

When the hash values do not match (No in step S306), the target data is likely to be corrupt or tampered. Thus, the controller 210 detects an abnormality in the circulation data and ends the operation for verification.

When the hash values match (Yes in step S306), the authenticity has been verified for both the target data and the process information. Thus, the controller 210 detects no abnormality in the circulation data and ends the operation for verification.

The data circulation system 1 according to Embodiment 1 has been described. The data circulation system 1 according to Embodiment 1 generates individual metadata including target data information and process information. The target data information indicates, as target data, one or more of multiple pieces of device data included in the main data. The process information is associated with a process performed on the target data. Thus, the data circulation system 1 can attach information individually to one or more of the pieces of data. The data circulation system 1 can thus appropriately manage information attached to the device data. For example, the data circulation system 1 involves a lighter workload for managing information attached to the device data than when attaching information about all the processes to the overall main data.

Further, the data circulation system 1 according to Embodiment 1 uses individual metadata including the certification information, and can thus verify the authenticity of the target data and the authenticity of the process information.

### Embodiment 2

A data circulation system 1 according to Embodiment 2 will now be described. The data circulation system 1 according to Embodiment 2 can reflect the order relation between multiple pieces of process information, in addition to having the features in Embodiment 1.

Embodiment 2 differs from Embodiment 1 in the function of the individual metadata generator 114a shown in FIG. 3, the function of the data verifier 213 shown in FIG. 4, and the data structure of the individual metadata.

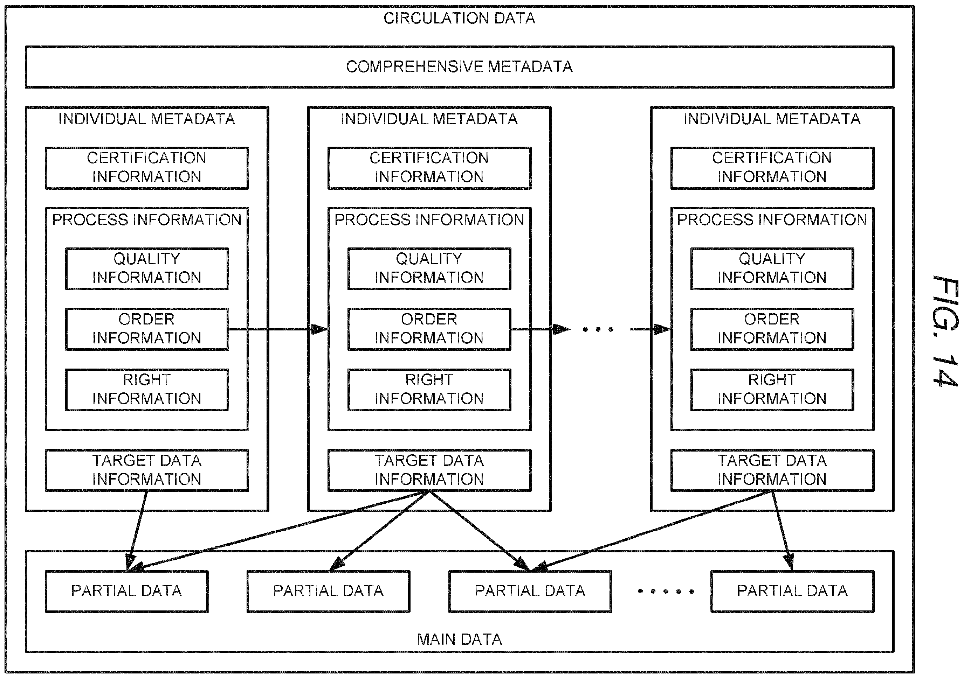

With reference to FIG. 14 showing the data structure of circulation data according to Embodiment 2, the data structure of the individual metadata will be described focusing on its differences from Embodiment 1.

The process information in the individual metadata further includes order information, in addition to having the features in Embodiment 1. The order information indicates the order relation with other process information. The order relation with other process information is the relation of order between multiple pieces of process information about the processes performed for the main data. For example, when a new process is performed for the main data that already has multiple pieces of process information attached, the process information about the new process indicates an order relation being after the other process information.

In FIG. 14, an arrow extending from order information included in first process information and pointing to second process information indicates that the first process information follows the second process information. The order information thus also indicates the previous process information. These arrows can be used to verify the order relation from the oldest process information to the newest process information.

The order information includes, for example, the individual process information ID provided to the previous process information and the hash value of the previous process information. The order information including the hash value allows detection of any tampered order relation.

The functions of the individual metadata generator 114a added to those described in Embodiment 1 will now be described. The individual metadata generator 114a generates the order information, in addition to having the features in Embodiment 1. For example, the individual metadata generator 114a generates the order information by acquiring the newest piece of individual metadata from among the pieces of individual metadata already generated before a process is performed, and by determining the process information included in the newest individual metadata to be the previous process information. When no individual metadata is found before the process, information indicating, for example, the first position may be determined to be the order information.

The functions of the data verifier 213 added to those described in Embodiment 1 will now be described. The data verifier 213 verifies the order information, in addition to having the features in Embodiment 1. The data verifier 213 calculates the hash value of the previous process information indicated by the order information, and compares the calculated hash value with the hash value included in the order information. The data verifier 213 repeats these processes for all pieces of individual metadata, thus verifying the order relation indicated by the order information.

The data circulation system 1 according to Embodiment 2 has been described. The data circulation system 1 according to Embodiment 2 can reflect the order relation between pieces of process information and verify the order relation, in addition to having the features in Embodiment 1.

### Embodiment 3

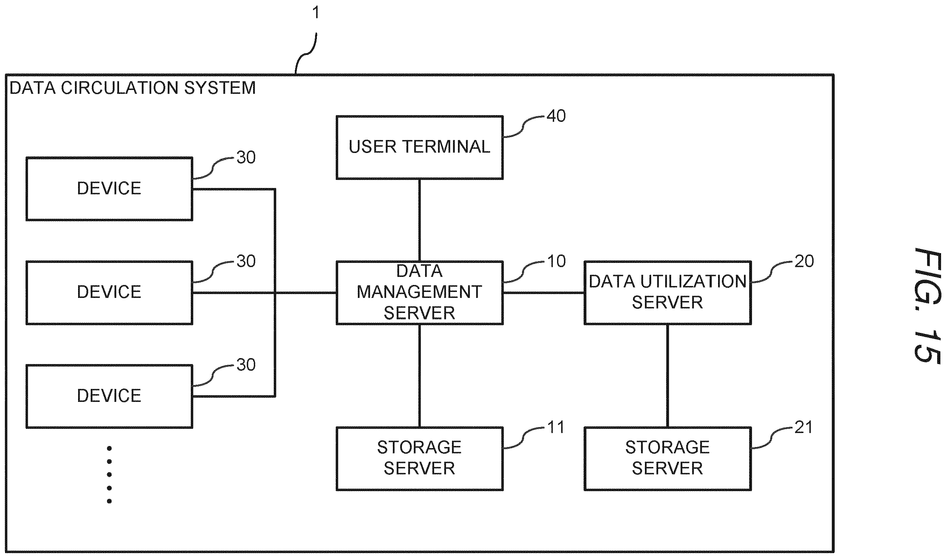

A data circulation system 1 according to Embodiment 3 will now be described with reference to FIG. 15. The data circulation system 1 according to Embodiment 3 can suspend circulation of data upon a request from a party with the right to suspend use of the data. The data circulation system 1 according to Embodiment 3 includes a user terminal 40 capable of communicating with the data management server 10, in addition to having the features in Embodiment 1.

The user terminal 40 is, for example, a personal computer or a smartphone owned by the owner of a device 30 that has provided device data. The owner of the user terminal 40 has the right to suspend use of the provided device data. The owner of the user terminal 40 can request, through the user terminal 40, the data management server 10 to suspend circulation of the device data. More specifically, the owner of the user terminal 40 can request the data management server 10 to suspend circulation of the device data by transmitting a circulation suspension request to the data management server 10 through the user terminal 40.

The circulation suspension request includes, for example, information indicating the owner of the user terminal 40 or a party with the right to suspend use, and suspension target information indicating the device data for which the circulation is to be suspended.

The data management server 10 according to Embodiment 3 includes functional components similar to those in FIG. 3 but includes a communicator 100 and a circulation data generator 115 having functions different from those in FIG. 3. The different functions will now be described.

The communicator 100 receives a circulation suspension request from the user terminal 40, in addition to having the features in Embodiment 1. The communicator 100 according to Embodiment 3 is an example of suspension request reception means according to the present disclosure.

The circulation data generator 115 is capable of generating circulation data by excluding the device data to suspend circulation from the main data based on the circulation suspension request, in addition to having the features in Embodiment 1. More specifically, the circulation data generator 115 generates, for example, the circulation data in the manner described below. The circulation data generator 115 first extracts all pieces of individual metadata including right information indicating the same party with the right to suspend use as the circulation suspension request. Among the pieces of target data indicated by the target data information in the extracted individual metadata, the circulation data generator 115 excludes, from the main data, the device data indicated by the suspension target information in the circulation suspension request. The circulation data generator 115 then generates circulation data including the individual metadata, the comprehensive metadata, and the main data excluding the device data to be suspended.

The data circulation system 1 according to Embodiment 3 has been described. The data circulation system 1 according to Embodiment 3 uses individual metadata including right information. Thus, the data circulation system 1 can appropriately exclude, from circulation data, the device data for which suspension of circulation has been requested based on the circulation suspension request. Thus, the party with the right to suspend use of device data can cause the data management server 10 to suspend circulation of the device data by transmitting a circulation suspension request to the data management server 10 through the user terminal 40.

### Modifications

In the above embodiments, device data is not manipulated for a process. In some embodiments, a process for manipulating device data may be performed. Examples of such processes include coarsening the granularity of data, calculating the sum of data for each predetermined period and aggregating the sums, anonymizing data, and saving manipulated data as new target data while also maintaining unmanipulated target data. The data manipulation can cause an abnormality to be detected in verifying individual metadata generated before the manipulation. This situation may be corrected by generating another piece of individual metadata or may be left with an abnormality expected using the individual metadata unchanged.

In the above embodiments, the data management server 10 acquires device data from the devices 30 alone. In some embodiments, the data management server 10 may, for example, receive circulation data from another data management server to acquire and save device data. In this case, the data management server 10 also saves individual metadata included in the circulation data. In other words, the data management server 10 saves data including individual metadata generated by another data management server. The data management server 10 can further generate individual metadata corresponding to device data. Thus, multiple data management servers can individually generate individual metadata for device data.

In the hardware configuration shown in FIG. 5, the data management server 10 includes the secondary storage 1004. However, the secondary storage 1004 may be installed external to the data management server 10, and the data management server 10 and the secondary storage 1004 may be connected to each other via the interface 1003. In this configuration, the secondary storage 1004 may be a removable medium such as a USB flash drive or a memory card.

In place of the hardware configuration shown in FIG. 5, the data management server 10 may include a dedicated circuit including an application-specific integrated circuit (ASIC) or a field-programmable gate array (FPGA). In the hardware configuration shown in FIG. 5, some functions of the data management server 10 may be implemented by, for example, a dedicated circuit connected to the interface 1003.

The program used in the data management server 10 may be distributed on a non-transitory computer-readable recording medium such as a compact disc read-only memory (CD-ROM), a digital versatile disc (DVD), a USB flash drive, a memory card, or an HDD. A specific or a general-purpose computer on which the program is installed can function as the data management server 10.

The program described above may be stored in a storage in another server on the Internet and may be downloaded from the server.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2018-183697, filed on September 28, 2018, the entire disclosure of which is incorporated by reference herein.

### Reference Signs List

- 1: Data circulation system
- 10: Data management server
- 11: Storage server
- 20: Data utilization server
- 21: Storage server
- 30: Device
- 40: User terminal
- 100: Communicator
- 110: Controller
- 111: Data saver
- 112: Process definer
- 113: Data acquirer
- 114: Process implementer
- 114a: Individual metadata generator
- 115: Circulation data generator
- 120: Storage
- 200: Communicator
- 210: Controller
- 211: Data requester
- 212: Data saver
- 213: Data verifier
- 220: Storage
- 1000: Bus
- 1001: Processor
- 1002: Memory
- 1003: Interface
- 1004: Secondary storage

## Claims

1. A data management server, comprising:
main data acquisition means for acquiring main data including a plurality of pieces of device data; and
individual metadata generation means for generating individual metadata, the individual metadata including target data information and process information, the target data information indicating, as target data, one or more of the plurality of pieces of device data included in the main data, the process information being associated with a process performed on the target data indicated by the target data information.

2. The data management server according to claim 1, wherein
the individual metadata further includes certification information certifying authenticity of the target data and authenticity of the process information.

3. The data management server according to claim 1 or 2, wherein
the process information includes order information indicating an order relation with other process information.

4. The data management server according to any one of claims 1 to 3, further comprising:
circulation data generation means for generating circulation data, the circulation data including the main data acquired by the main data acquisition means and the individual metadata generated by the individual metadata generation means; and
circulation data transmission means for transmitting the circulation data generated by the circulation data generation means.

5. The data management server according to claim 4, further comprising:
suspension request reception means for receiving a circulation suspension request for requesting suspension of circulation of a piece of device data included in the circulation data,
wherein
the process information includes right information about a right for the target data, and
the circulation data generation means determines a piece of device data to be excluded based on the circulation suspension request and based on the right information, and generates the circulation data excluding the piece of device data determined to be excluded.

6. A data utilization server, comprising:
circulation data reception means for receiving circulation data, the circulation data including main data and individual metadata, the main data including a plurality of pieces of device data, the individual metadata including target data information and process information, the target data information indicating, as target data, one or more of the plurality of pieces of device data included in the main data, the process information being associated with a process performed on the target data indicated by the target data information; and
data verification means for verifying the process information and the target data.

7. The data utilization server according to claim 6, wherein
the individual metadata further includes certification information certifying authenticity of the target data and authenticity of the process information, and
the data verification means verifies, based on the certification information, the authenticity of the target data and the authenticity of the process information.

8. The data utilization server according to claim 6 or 7, wherein
the process information includes order information indicating an order relation with other process information, and
the data verification means verifies the order relation indicated by the order information.

9. A data circulation system, comprising:
a data management server; and
a data utilization server,
wherein
the data management server includes
main data acquisition means for acquiring main data including a plurality of pieces of device data,
individual metadata generation means for generating individual metadata, the individual metadata including target data information and process information, the target data information indicating, as target data, one or more of the plurality of pieces of device data included in the main data, the process information being associated with a process performed on the target data indicated by the target data information,
circulation data generation means for generating circulation data, the circulation data including the main data acquired by the main data acquisition means and the individual metadata generated by the individual metadata generation means, and
circulation data transmission means for transmitting the circulation data generated by the circulation data generation means, and
the data utilization server includes
circulation data reception means for receiving the circulation data transmitted by the data management server, and
data verification means for verifying the process information and the target data included in the circulation data.

10. A data management method, comprising:
generating target data information indicating, as target data, one or more of a plurality of pieces of device data included in main data;
generating process information associated with a process performed on the target data indicated by the target data information; and
generating individual metadata including the target data information and the process information.

11. A program for causing a computer to function as:
main data acquisition means for acquiring main data including a plurality of pieces of device data; and
individual metadata generation means for generating individual metadata, the individual metadata including target data information and process information, the target data information indicating, as target data, one or more of the plurality of pieces of device data included in the main data, the process information being associated with a process performed on the target data indicated by the target data information.
